**Europäisches Patentamt**

**European Patent Office**

**Office européen des brevets**

(19)

(11) Veröffentlichungsnummer: **0 149 871**
**B1**

# (12) EUROPÄISCHE PATENTSCHRIFT

(45) Veröffentlichungstag der Patentschrift:
**07.12.88**

(21) Anmeldenummer: **84201935.8**

(22) Anmeldetag: **24.12.84**

(51) Int. Cl.⁴: **G 11 B 15/18**

(54) Schaltmechanismus für das Laufwerk eines Magnetbandkassettengerätes.

(30) Priorität: **19.01.84 DE 3401691**

(43) Veröffentlichungstag der Anmeldung:
**31.07.85 Patentblatt 85/31**

(45) Bekanntmachung des Hinweises auf die Patenterteilung:
**07.12.88 Patentblatt 88/49**

(84) Benannte Vertragsstaaten:
**DE FR GB IT**

(56) Entgegenhaltungen:
**EP-A- 0 072 586**
**AT-B- 351 793**
**DE-A- 2 517 146**
**DE-A- 2 830 319**
**DE-A- 3 035 527**

(73) Patentinhaber: **Philips Patentverwaltung GmbH,**
**Wendenstrasse 35 Postfach 10 51 49,**
**D-2000 Hamburg 1 (DE)**

(84) Benannte Vertragsstaaten: **DE**

(73) Patentinhaber: **N.V. Philips' Gloeilampenfabrieken,**
**Groenewoudseweg 1, NL-5621 BA Eindhoven (NL)**

(84) Benannte Vertragsstaaten: **FR GB IT**

(72) Erfinder: **Deutsch, Armin, Berliner Ring 109,**
**D-6330 Wetzlar (DE)**
Erfinder: **Ruyten, Henricus, Volpertshäuserstrasse 14,**
**D-6330 Wetzlar (DE)**

(74) Vertreter: **Kupfermann, Fritz-Joachim, Dipl.-Ing. et al,**
**Philips Patentverwaltung GmbH**
**Wendenstrasse 35 Postfach 10 51 49,**
**D-2000 Hamburg 1 (DE)**

**Beschreibung**

Die Erfindung bezieht sich auf einen Schaltmechanismus für das Laufwerk eines Magnetbandgerätes mit einer gegenüber dem abzutastenden Magnetband vor und zurück verfahrenden Kopfplatte, die in der Spielstellung vorgefahren verriegelt ist und nach Entriegelung, entweder bei Erreichen des Bandendes mittels einer Servoeinrichtung oder bei Eindrücken einer Bedienungsstange, unter Federkraft zurückfahrbar ist in eine Pausenstellung, in der die Kassette im Laufwerk eingeschoben verbleibt, wobei die Bedienungsstange mit einer Führungskulisse versehen ist, die für die Entriegelung der Kopfplatte sorgt und eine Schaltkontur aufweist für die Bedienung eines Antriebsschalters des Laufwerksmechanismus.

Ein derartiges Gerät ist bekannt aus der EP-A-0 072 586. Durch das Eindrücken einer Auswurftaste über einen kurzen Weg kann das Laufwerk in eine Pausenstellung (Stand by) überführt werden. In dieser Pausenstellung bleibt die Kassette in das Gerät eingeschoben, das Laufwerk steht still. Beim Drücken der Taste an der Bedienungsstange wird die Kopfplatte von Hand in die Spielstellung geschoben und dort elektromagnetisch arretiert. Zu dem Eindrücken der Bedienungstaste ist eine gewisse Druckkraft notwendig, die heute unerwünscht ist. Bei modernen Geräten strebt man nur ein leichtes Anstossen der Bedienungstasten an. Besonders erwünscht ist die leichte Bedienung dann, wenn das Gerät ohne vorheriges Kassettenauswerfen und Neu-Einschieben aus der Pausenstellung in die Spielstellung gebracht werden soll.

Es ist Aufgabe der Erfindung, einen Schaltmechanismus zu schaffen, bei dem das Laufwerk mit leichtem Tastendruck aus der Pausenstellung (Stand by) in die Spielstellung überführbar ist, wobei ein Servomechanismus der Überführvorgang von der Pausenstellung in die Spielstellung übernehmen soll.

Die gestellte Aufgabe wird erfindungsgemäss dadurch gelöst, dass

- auf der Kopfplatte ein schwenkbares Bedienungselement vorgesehen ist, das in einer Mittelstellung beim Zurückverfahren der Kopfplatte in die Pausenstellung den Antriebsschalter abschalten kann und in einer ersten Schwenkstellung den Antriebsschalter unberührt lässt, wobei an dem Bedienungselement eine Schaltfläche vorgesehen ist, mittels der der Antriebsschalter beim Zurückverfahren der Kopfplatte in die Pausenstellung abgeschaltet wird, wenn sich das Bedienungselement in seiner Mittelstellung befindet,
- in der Pausenstellung das Bedienungselement mittels eines Anschlages an der Bedienungsstange von der Mittelstellung in die erste Schwenkstellung überführt wird, wenn die Bedienungsstange nach erneutem Eindrücken in einer Eindrück-Richtung verschoben wird,
- sich der Antriebsschalter nach diesem erneuten Eindrücken beim Zurückfahren der Bedienungsstange in der Gegenrichtung einschaltet, wobei die damit eingeschaltete Servoeinrichtung des Laufwerkmechanismus die Kopfplatte aus der Pausenstellung in die Spielstellung vorfährt, worauf das Bedienungselement in die Mittelstellung zurückkehrt.

Auf diese Weise kann der Antriebsschalter sowohl von der Kopfplatte als auch von der Bedienungsstange ausgeschaltet werden. Die Kopfplatte kann damit sowohl bei Bandende als auch bei Pausenwunsch in die Pausenstellung zurückfahren.

Das Abschalten des Antriebsschalters hat dann zur Folge, dass das Laufwerk nicht ohne besonderes Kommando wieder mittels der Servoeinrichtung in die Spielstellung zurückfahren kann. Soll die Kopfplatte aber wieder nach vorn in die Spielstellung verfahren werden, und zwar ohne manuelle Kraft, dann muss dafür gesorgt werden, dass der Antriebsschalter erst die Servoeinrichtung einschaltet, damit diese die Kopfplatte in die Spielstellung verfahren kann. Dazu dient die schwenkbare Anordnung des Bedienungselementes, das von der Mittelstellung, in der es den Schalter ausschaltet, in die erste Schwenkstellung überführt werden kann, in der es den Antriebsschalter unberührt lässt. Das wird bewirkt durch das erneute leichte Eindrücken der Bedienungsstange, wobei der Anschlag das Bedienungselement in die erste Schwenkstellung verschwenkt. Durch dieses leichte Eindrücken der Bedienungsstange kann damit die Kopfplatte aus der Pausenstellung wieder in die Spielstellung vorfahren.

Nach einer weiteren Ausgestaltung der Erfindung ist vorgesehen, dass das Bedienungselement in der ersten Schwenkstellung verbleibt, wenn die Bedienungsstange in der Gegenrichtung zurückbewegt wird, und dass der Antriebsschalter geschlossen bleibt, wenn das Bedienungselement beim Vorfahren der Kopfplatte in die Spielstellung am Antriebsschalter vorbei unter Federkraft in die Mittelstellung zurückschwenkt. Damit wird erreicht, dass beim Zurückfahren der Bedienungsstange nach dem kurzen erneuten Eindrücken der Antriebsschalter nicht wieder kurzfristig vom Bedienungselement ausgeschaltet wird. Die Servoeinrichtung kann damit ungestört die Kopfplatte in die Spielstellung verfahren. Während des Vorschiebens der Kopfplatte schwenkt das Bedienungselement wieder in die Mittelstellung zurück, um vorbereitet zu sein für ein erneutes Zurückfahren in die Pausenstellung.

In weiterer Ausgestaltung der Erfindung ist es dabei vorteilhaft, wenn das Bedienungselement nach dem Verschwenken in die erste Schwenkstellung in dieser Schwenkstellung arretiert ist, wenn die Bedienungsstange in der Gegenrichtung zurückfährt, und dass sich die Arretierung löst, wenn die Kopfplatte in die Spielstellung vorfährt. Durch die Arretierung ist sichergestellt, dass das Bedienungselement in seine Mittelstellung erst wieder zurückfallen kann, wenn der Servomechanismus bereits angelaufen ist und die Kopfplatte in Richtung auf die Spielstellung verfährt.

Nach einer weiteren Ausgestaltung der Erfindung ist vorgesehen, dass das Bedienungselement ein um ein Drehgelenk schwenkbarer einarmiger Schwenkhebel ist, der unter Federbelastung bestrebt ist, sich selbsttätig aus der ersten Stellung in die Mittelstellung zurückzustellen. Ein solcher Schwenkhebel ist ein einfaches Bauelement, das immer in der Lage ist, in seine Mittelstellung zurückzukehren, wenn es sich beim Vorfahren der Kopfplatte in Richtung auf die Spielstellung aus der Arretierung gelöst hat und damit frei geworden ist.

Nach einer weiteren Ausgestaltung der Erfindung ist vorgesehen, dass die Schaltfläche am freien Ende des Schwenkhebels angeordnet ist und über dieses freie Hebelende in Richtung des Schwenkhebels ein den Schwenkhebel verlängernder Ansatz herausragt, der mit einem Arretierhaken zusammenwirkt. Integriert in einem Bauteil hat das Schwenkelement damit die Möglichkeit, zwei Funktionen auszuführen. Die eine Funktion ist das Ausschalten des Schalters mit Hilfe der Schaltfläche, und die zweite Funktion ist das Arretieren des Schwenkhebels in der ersten Stellung.

Nach einer weiteren Ausgestaltung der Erfindung ist vorgesehen, dass beim Einlegen der Kassette der Schwenkhebel aus seiner ersten Stellung über die Mittelstellung in eine zweite Stellung schwenkbar ist mittels des Anschlages, in welcher zweiten Stellung der Schwenkhebel den Antriebsschalter unberührt lässt. Durch diese zweite Schwenkstellung ist sichergestellt, dass der Schwenkhebel beim Eindrücken einer Kassette in das Gerät, wobei die Schaltkontur der Bedienungsstange den Antriebsschalter schliesst, den Antriebsschalter nicht blockieren kann. Das ist auch wichtig, weil auf diese Weise sichergestellt ist, dass die Servoeinrichtung bei ihrem Betrieb nicht gestört werden kann.

Nach einer weiteren Ausgestaltung der Erfindung ist vorgesehen, dass der Schwenkhebel im Bereich des Drehgelenkes eine senkrecht zur Hebelmittellinie verlaufende Verbreiterung aufweist, über die sich eine nachgebende Feder spannt, die den Schwenkhebel in die Mittelstellung zurückdrängt. Dies ist eine sehr günstige Ausführungsform eines in zwei Richtungen aus seiner Mittelstellung verschwenkbaren Schwenkhebels.

Nach einer weiteren Ausgestaltung der Erfindung ist vorgesehen, dass die Bedienungsstange eine Auswurfstange ist, an der ein Leitstift angeordnet ist, der eine Kontur eines Einzieh- und Auswurfhebels abfährt, wobei die Kontur eine schräge Fläche aufweist, gegen welche der Leitstift beim erneuten Drücken der Taste an der Auswurfstange aufläuft und dabei durch einen spürbaren Druckpunkt anzeigt, dass der Schwenkhebel die erste Stellung erreicht hat. Der Einzieh- und Auswurfhebel kann damit über die Bedienungsstange auch die Antriebsschalterbetätigung beeinflussen. Wenn sich die Kopfplatte in der Pausenstellung befindet und durch erneutes Eindrücken der Bedienungsstange wieder in die Spielstellung gebracht werden soll, dann gibt der Leitstift zusammen mit der schrägen Fläche dem Benutzer ein Indiz bzw. ein Gefühl dafür, dass die Bedienungsstange für das Wiederanlaufen des Laufwerksmechanismus bzw. das Einschalten des Antriebsschalters weit genug eingedrückt ist und der Schwenkhebel eingerastet ist in der ersten Schwenkstellung.

Die Erfindung wird anhand des in der Zeichnung dargestellten Ausführungsbeispieles näher erläutert. Es zeigen:

Fig. 1 eine Ansicht des Magnetbandkassettengerätes von der Antriebsseite her,

Fig. 2A eine schaubildlich vergrösserte Darstellung einer Servoeinrichtung des Gerätes in einer ersten Funktionslage,

Fig. 2B die Servoeinrichtung nach Fig. 2A in einer zweiten Funktionslage,

Fig. 3 das Magnetbandkassettengerät von der Tonkopfseite her gesehen bei herausgenommener Kassette,

Fig. 4 das Magnetbandkassettengerät von der Tonkopfseite her gesehen bei eingeschobener Kassette und gestarteter Servoeinrichtung zum Vorfahren der Kopfplatte,

Fig. 5 das Magnetbandkassettengerät mit der Kopfplatte in der Spielstellung nach dem Ausschalten der Servoeinrichtung,

Fig. 6 das Gerät in der Pausenstellung (Stand by), verursacht entweder durch Bandende oder durch gewünschtes Eindrücken der Bedienungsstange,

Fig. 7 das Gerät bei eingedrückter Bedienungsstange, um das Gerät zu starten, jedoch bevor es gestartet ist,

Fig. 8 das Gerät bei wieder herausgefahrener Bedienungsstange nach dem Starten der Servoeinrichtung, wobei die Kopfplatte aber noch nicht in ihre Spielstellung zurückgekehrt ist.

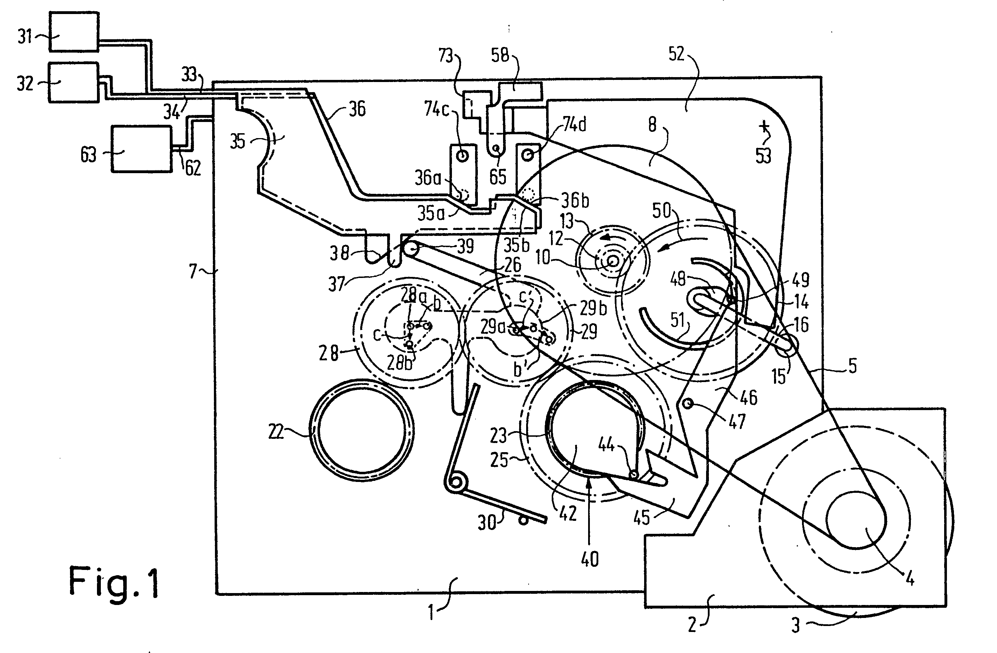

Das in Fig. 1 dargestellte Magnetbandkassettengerät weist ein Gestell 1 auf, das über eine Stütze 2 einen nur in einer Richtung umlaufenden Antriebsmotor 3 trägt. Das Antriebsritzel 4 des Motors 3 führt eine Peese 5, die über eine Schwungradscheibe 8 geführt ist. Die Schwungscheibe 8 ist im Gestell 1 gelagert und ist fest verbunden mit einer Tonwelle 10. Weiterhin ist die Schwungscheibe 8 mit einem Zahnrad 12 verbunden. Über eine Rutschkupplung ist koaxial zu dem Zahnrad 12 ein weiteres Zahnrad 13 auf der Schwungscheibe 8 drehbar angeordnet. Mit dem Zahnrad 12 auf der Schwungscheibe 8 ist ständig kämmend ein als Zahnrad ausgebildetes Schaltrad 14 in Eingriff. Dieses Zahnrad 14 ist schwenkbar um eine Achse 15. Die Achse 15 trägt einen in Fig. 1 schematisch dargestellten Schwenkarm 16, auf dem drehbar das Schaltrad 14 gelagert ist.

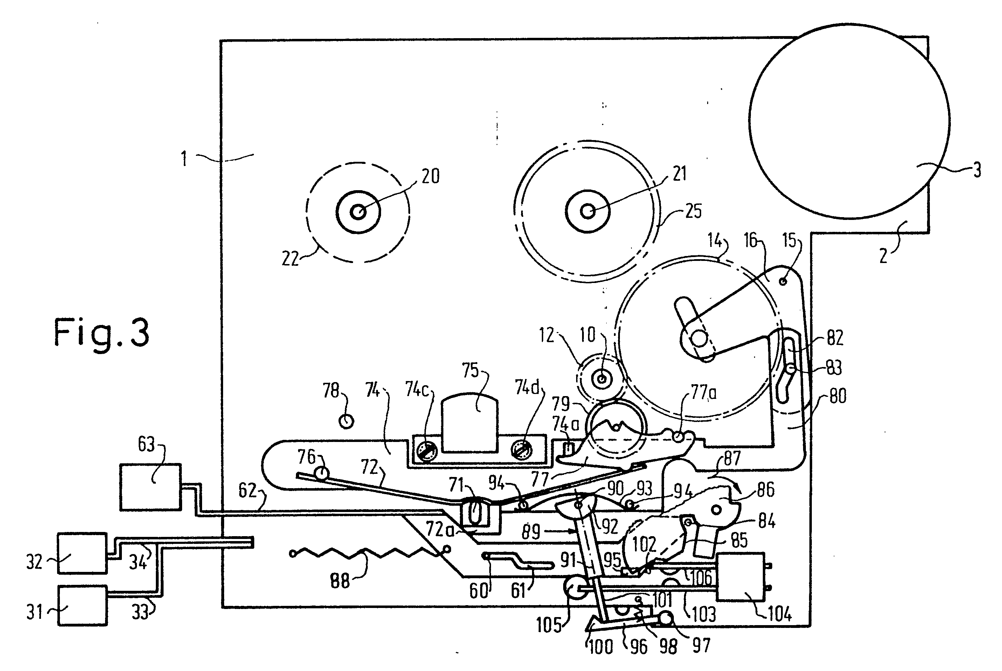

Wie auch in Fig. 3 bis 8 dargestellt, sind drehbar im Gestell 1 Wickeldorne 20 und 21 gelagert. Diese Wickeldorne 20 und 21 sind fest verbunden mit Schnellspulrädern 22, 23. Über eine Rutschkupplung ist mit dem Wickeldorn 21 ein Spielrad 25 verbunden.

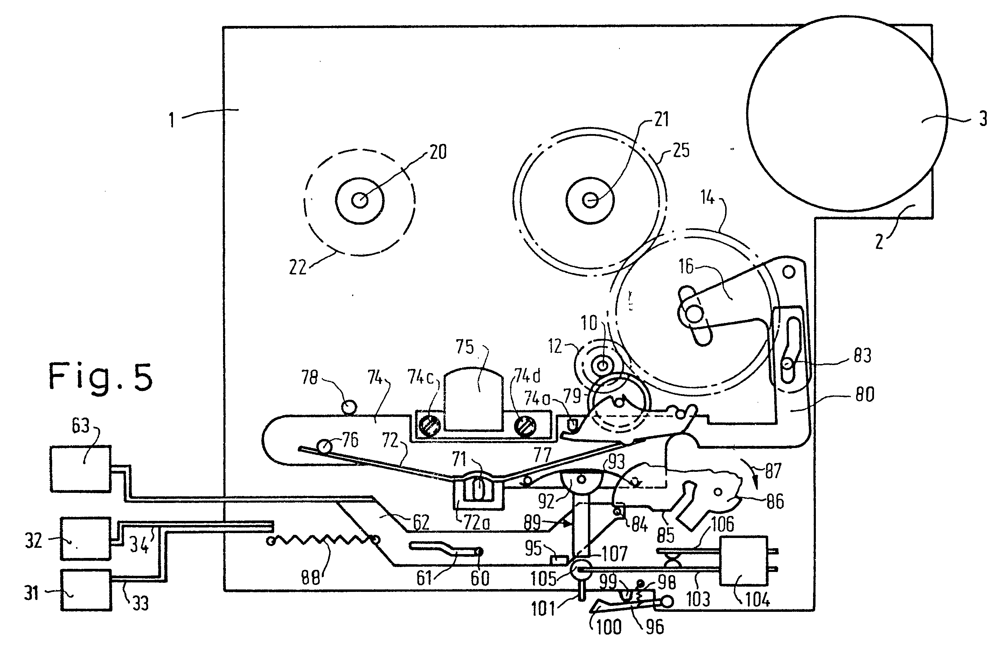

In Fig. 5 ist dargestellt, wie das Spielrad 25 über das Schaltrad 14 von dem Zahnrad 12 angetrieben wird.

Ein Bügel 26, der verschiebbar im Gestell 1 gelagert ist, trägt nebeneinander zwei Zahnräder 28, 29 (siehe Fig. 1). Eine Feder 30 drückt den Bügel 26 immer in eine in Fig. 1 dargestellte Ausgangsposition.

Der Bügel 26 trägt zwei Stifte 28a und 29a, die in einem dreieckigen Loch 28b bzw. einem Schlitz 29b verschiebbar sind im Gestell 1.

Zum schnellen Vor- und Rücklauf sind zwei Tasten 31 und 32 vorgesehen. Über Tastenstangen 33 und 34 sind diese Tasten 31, 32 mit Schiebern 35, 36 verbunden. Diese Schieber 35 und 36 wirken auf den Bügel 26 ein. Dazu ist der Schieber 35 mit einem Ansatz 37 versehen, der Schieber 36 trägt entsprechend eine Auflauffläche 38. Der Ansatz 37 und die Auflauffläche 38 arbeiten auf einen Stift 39 des Bügels 26. Weiter sind die Schieber 35, 36 mit Auflaufflächen 35a, 35b bzw. 36a, 36b versehen, die auf Stifte 74c, 74d einer Kopfplatte 74 (Fig. 1, 3 bis 8) arbeiten können.

Wenn durch Eindrücken der Schnellspultaste 31 der Ansatz 37 gegen den Stift 39 des Bügels 26 drückt, kommt erst das Zahnrad 29 in Eingriff mit dem Zahnrad 13. Dabei macht der Stift 28a eine Bewegung in Richtung des Pfeiles b und der Stift 29a eine Bewegung in Richtung des Pfeiles c'. Bei weiterer Bewegung fährt der Stift 29a weiter in Richtung des Pfeiles b' und kommt das Zahnrad 29 in Eingriff mit dem Zahnrad 23. Das Magnetband wird jetzt mit dem Wickeldorn 21 schnell aufgewickelt. Wird die andere Schnellspultaste 32 eingedrückt, dann wirkt die Auflauffläche 38 auf den Stift 39 des Bügels 26 ein, wodurch der Stift 28a in Richtung des Pfeiles c und der Stift 29a in Richtung des Pfeiles c' fährt, wodurch das Zahnrad 29 mit dem Zahnrad 13 in Eingriff und das Zahnrad 28 mit dem Zahnrad 22 in Eingriff kommt. Dadurch wird der andere Wickeldorn 21 zum Schnellspulen angetrieben.

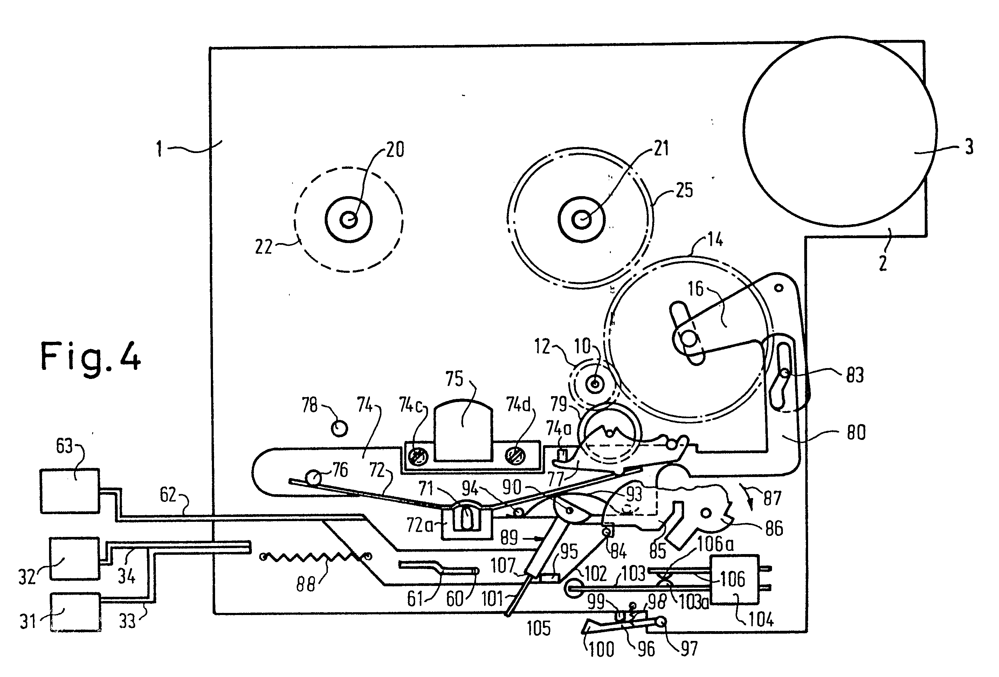

Wenn die Kopfplatte 74 in eine Spielstellung gelangt ist, nehmen die Stifte 74c, 74d die gestrichelte Lage in Fig. 1 ein. Diese Lage stimmt überein mit der Lage gemäss Fig. 5. Das Eindrücken der Bedienungsstange 33 bzw. 34 hat jetzt zur Folge, dass über die Auflauffläche 35a, 35b bzw. 36a, 36b die Stifte 74c, 74d und damit die Kopfplatte 74 nach oben geschoben werden, so dass ein Tonkopf 75 und eine Andruckrolle 79 von dem Magnetband abgehoben werden in eine Pausenstellung (Stand by) (Fig. 3, 4).

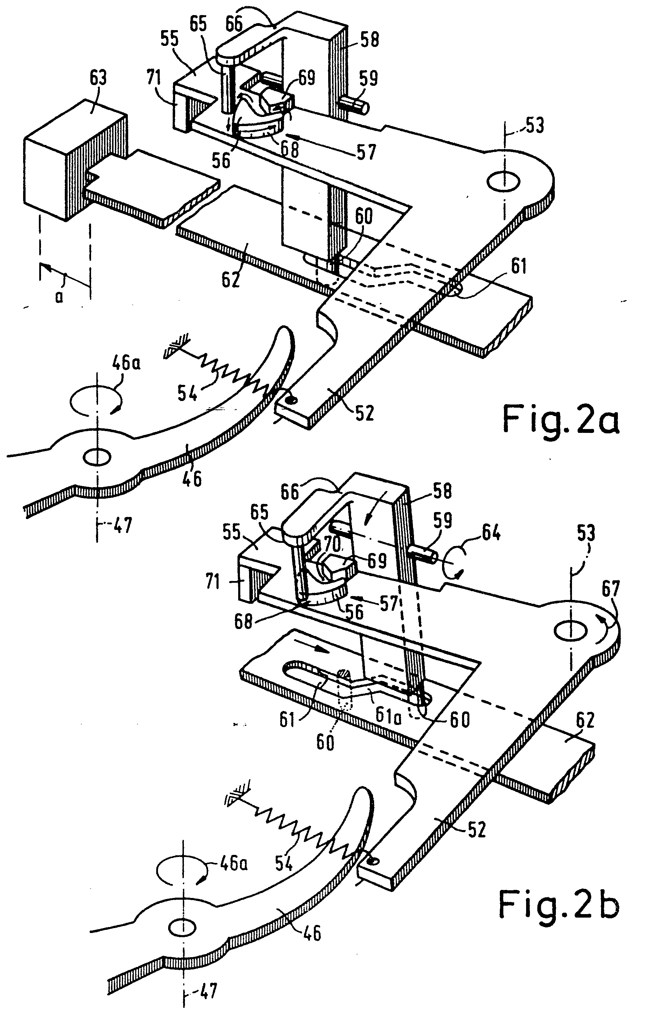

Ein Detektionsorgan 40, bestehend aus einer Scheibe 42, ist über eine Rutschkupplung mit dem Wickeldorn 21 verbunden. Auf der Scheibe 42 ist ein Stift 44 angeordnet, der innerhalb einer Schaltgabel 45 liegt. Die Schaltgabel 45 ist an einem Schaltelement 46 angeordnet, das um ein Lager 47 drehbar ist (vergl. auch Fig. 2A und 2B). Das Schaltrad 14 trägt in seiner Mitte erhaben vorstehend einen ein wenig ellipsenförmigen Nocken 48. Das Schaltelement 46 greift über das Schaltrad 14 und trägt einen Stift 49, der bei nach innen geschwenktem Schaltelement 46 um den Nocken 48 herumfahren kann bei Drehung des Schaltrades in Richtung eines Pfeiles 50. Um den Nocken 48 herum erstreckt sich in einem grösseren Abstand eine erhaben aus dem Schaltrad 14 herausstehende, spiralförmige Steuerkurve 51. Auch diese Steuerkurve 51 kann mit dem Stift 49 an dem Schaltelement 46 zusammenwirken, und zwar immer dann, wenn das Detektionsorgan den Bandstillstand feststellt. In diesem Fall drückt der Stift 44 nicht mehr gegen die Schaltgabel 45, wodurch der Stift 49 am Schaltelement 46 nicht mehr nach innen in Richtung auf den Nocken 48 belastet wird, sondern stehen bleibt und bei fortgehender Drehung des Schaltrades 14 in Richtung des Pfeiles 50 auf die Aussenseite der Steuerkurve 51 gelangt. Weil die Steuerkurve 51 spiralförmig ist, wird das Schaltelement 46 im Uhrzeigersinn um sein Lager 47 verschwenkt, wodurch das Schaltelement 46 gegen ein Verbindungselement 52 gedrückt wird. Das Schaltelement 46 schwenkt dabei in Richtung des Pfeiles 46a.

Das Verbindungselement 52 ist ein doppelarmiger Hebel, der um ein Lager 53 schwenkbar ist. Wie aus den schaubildlichen Darstellungen in Fig. 2A und 2B zu erkennen ist, ist das Verbindungselement 52 aufgrund der Wirkung einer Feder 54 im Uhrzeigersinn federbelastet. Damit spannt die Bewegung des Schaltelementes 46 im Uhrzeigersinn die Feder 54.

Der von dem Angriffspunkt des Schaltelementes 46 abgewandte Hebelarm 55 des Verbindungselementes 52 trägt eine Herzkurve 56, die zu einem Rastmechanismus 57 gehört. Zu dem Rastmechanismus 57 gehört auch ein Rasthebel 58, der um eine Achse 59 verschwenkbar ist. Die Achse 59 liegt parallel zu der Oberfläche des Gestelles 1. Der Rasthebel 58 trägt auf der von der Herzkurve 56 abgewandten Seite einen Führungsstift 60, der in einer schlitzförmigen Führungskulisse 61 in einer Bedienungsstange 62 einer Stop/Auswurftaste 63 vorgesehen ist. Die Verschiebungsrichtung a der Bedienungsstange 62 verläuft parallel zur Achse 59, und die Stange 62 wird mittels einer Zugfeder 88 in die Ausfahrrichtung gezogen. Der Führungsschlitz oder die Kulisse 61 haben einen solchen Verlauf, dass der Rasthebel 58, wie sich aus Fig. 2B ergibt, bei ausgeschobener Bedienungsstange 62 um die Achse 59 in Richtung eines Pfeiles 64 verschwenkt wird. Das Nach-Aussen-Schieben der Stop/Auswurftaste 63 bzw. der Stange 62 erfolgt durch das Einschieben einer Magnetbandkassette in das Gerät.

Die Bedienungsstange 62 trägt einen Leitstift 84, der eine Kontur 85 eines teilweise dargestellten Einzieh- und Auswerfhebels 86 abfährt (Fig. 4 bis 8). Für die Ausbildung und Wirkung des Hebels 86 wird auf die nicht vorveröffentlichte DE-Patentanmeldung P 3 312 136.2 verwiesen.

Wie Fig. 3 und 4 zeigen, läuft der Leitstift 84 nach dem Einschieben der Kassette entlang der Kontur 85, wobei durch Verschwenken des Einzieh- und Auswurfhebels 86 in Richtung eines Pfeiles 87 der Leitstift 84 und damit die Bedienungsstange 62 zum Ausfahren freigegeben wird.

Fig. 2A zeigt die Stange 62 in einer eingeschobenen Stellung, während die Fig. 2B die Stange 62 in ausgeschobener Stellung zeigt.

Der Rasthebel 58 trägt einen Raststift 65, der in die Herzkurve 56 einfahrbar ist und die Herzkurve umfahren kann. Die Umfahrbarkeit wird z.B. über ein Filmgelenk 66 herbeigeführt. In Fig. 2A (entsprechend der Lage der Stange 62 in Fig. 3) liegt der Stift 65 oberhalb der Herzkurve 56, da die Stange 62 eingedrückt ist. In Fig. 2B, wo die Stange 62 ausgefahren ist (in Fig. 4 dargestellt), ist der Stift 65 in seinen Wirkbereich mit der Herzkurve 56 eingeschwenkt. Damit kann der Stift 65 mit der Herzkurve 56 zusammenwirken, wenn das Schaltelement 46 das Verbindungselement 52, wie in der Darstellung nach Fig. 2B, entgegen dem Uhrzeigersinn in Richtung eines Pfeiles 67 verschwenkt wird. Bei diesem Verschwenken ist der Stift 65 an einer Seitenwand 68 der Herzkurve 56 entlang gelaufen. Ein Führungsnocken 69 sorgt dafür, dass der Stift 65 in eine Mulde 70 der Herzkurve 56 einfällt.

Am Hebelarm 55 ist ein Nocken 71 angeordnet. Dieser Nocken 71 wirkt, wie sich aus den Fig. 3 bis 8 ergibt, mit einer Blattfeder 72 sowie einem Teil 72a der Blattfeder 72 zusammen und erstreckt sich durch einen Längsschlitz des Gestells 1 hindurch. Die Blattfeder 72 drückt mit ihrem einen freien Ende gegen eine Halterung 77, die auf einer Kopfplatte 74 um eine Achse 77a schwenkbar gelagert ist. Das andere freie Ende drückt gegen einen Stift 76 der Kopfplatte 74. Diese Kopfplatte 74 trägt in ihrer Mitte einen Tonkopf 75 und rechts des Tonkopfes 75 die Halterung 77, in der eine Andruckrolle 79 gelagert ist. Die Halterung 77 wird in der zurückgezogenen Stellung der Kopfplatte 74 gegen einen Anschlag 74a der Kopfplatte 74 gedrückt.

Die Kopfplatte 74 hat ein abgewinkeltes Ende 80. Das abgewinkelte Ende 80 weist einen Schlitz 82 auf, in dem ein Stift 83 verschiebbar ist, der auf dem Schwenkarm 16 befestigt ist. Dadurch ist in der Stellung nach Fig. 5 der Schwenkarm 16 derart um die Achse 15 verschwenkt, dass das Schaltrad 14 mit dem Spielrad 25 und dem Zahnrad 12 kämmt. Dementsprechend ist in der Stellung nach Fig. 5 die Druckrolle 79 gegen die Tonwelle 10 gedrückt, wobei die Halterung 77 vom Anschlag 74a freigekommen ist.

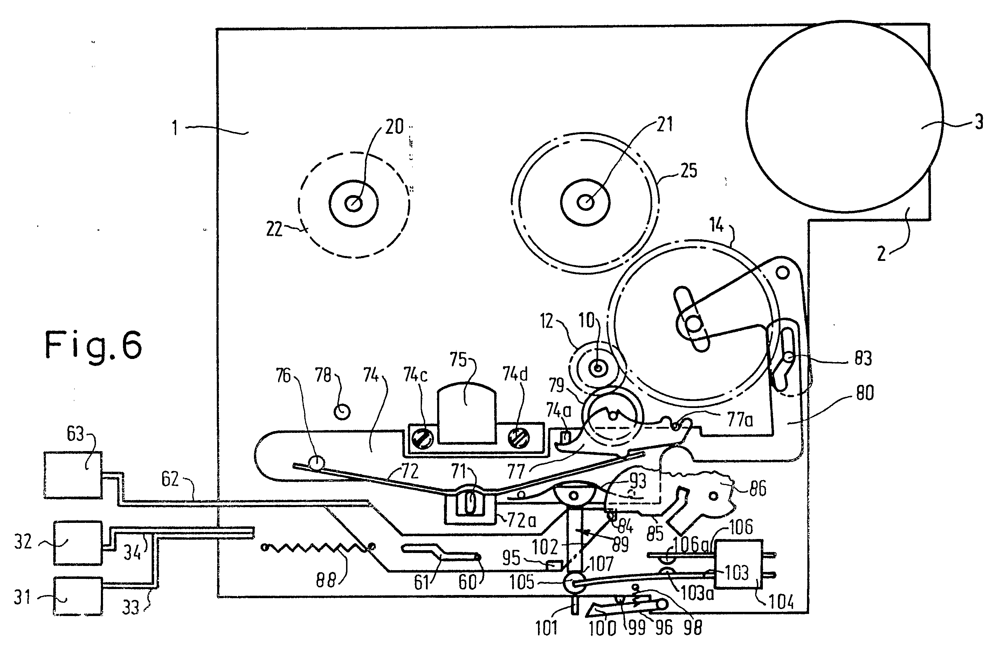

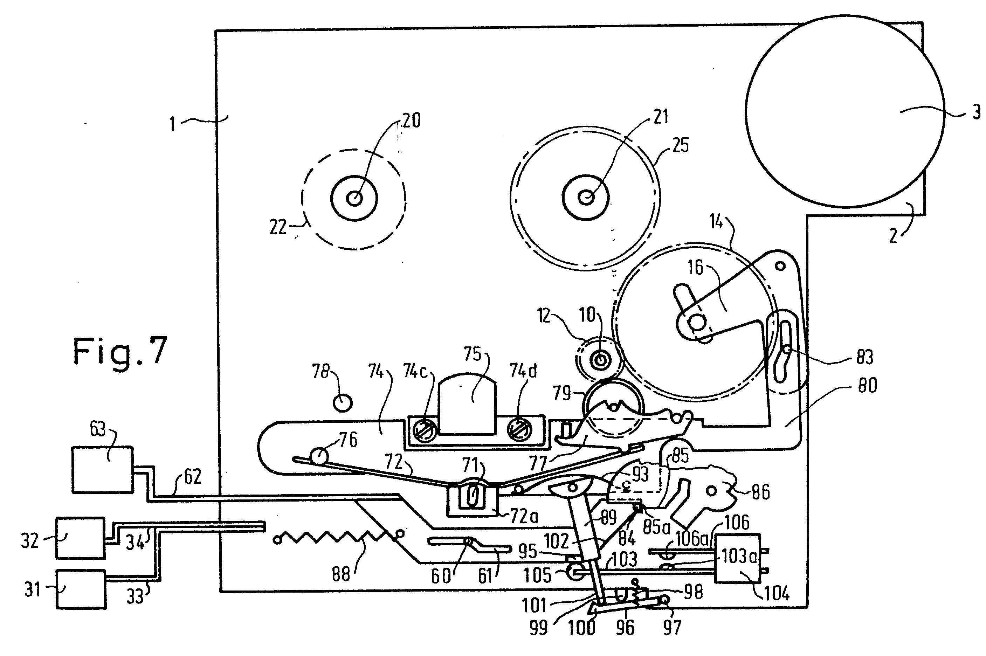

An der Kopfplatte 74 ist ein einarmiger Schwenkhebel 89 um ein Drehgelenk 90 schwenkbar gelagert. Der Schwenkhebel 89 hat im Bereich des Drehgelenkes 90 eine senkrecht zur Hebelmittellinie 91 verlaufende Verbreiterung 92. Über diese Verbreiterung 92 spannt sich eine Feder 93, die sich an Stiften 94 an der Kopfplatte 74 abstützt. Die Feder 93 sorgt dafür, dass der Schwenkhebel 89 über die Verbreiterung 92 stets in eine die Mittelstellung zurückgedrängt wird (Fig. 5). Daneben ist der Schwenkhebel 89 in zwei weitere Stellungen rechts und links der Mittelstellung einschwenkbar. Die erste Schwenkstellung ist erreichbar durch Anstossen eines Anschlages 95 an der Bedienungsstange 62 (Fig. 7), in welcher ersten Schwenkstellung der Schwenkhebel 89 arretiert ist an einem Arretierhebel 96. Dieser Arretierhebel 96 ist schwenkbar gelagert am Gestell 1 um eine Achse 97. Eine Feder 98 zieht den Arretierhebel 96 ständig gegen einen Anschlag 99. Der Arretierhebel 96 hat an seinem vorderen freien Ende einen Arretierhaken 100, der in Richtung auf den Schwenkhebel 89 keilförmig ausgebildet ist. Diese keilförmige Ausbildung dient dazu, dass ein verlängernder Ansatz 101 am Schwenkhebel 89 beim Bewegen des Schwenkhebels 89 von der Lage aus Fig. 6 in die Lage nach Fig. 7 hinter den Haken 100 laufen und hinter ihm dann verrasten kann.

An der Bedienungsstange 62 ist eine Leitkontur 102 vorgesehen, die mit einem Kontaktarm 103 eines Antriebsschalters 104 zusammenwirkt. An dem Kontaktarm 103 ist eine Abtastnase 105 vorgesehen, die an der Leitkontur 102 in Fig. 3 und 7 anliegend dargestellt ist. Es ist ein zweiter Kontaktarm 106 vorgesehen, der über Kontaktpunkte 103a, 106a mit dem Kontaktarm 103 kontaktieren kann, um damit den Schalter 104 zu schliessen.

Die Funktionsweise des Schaltmechanismus lässt sich wie folgt beschreiben. Wird eine Kassette eingelegt, dann fährt die Bedienungsstange 62 aus der Stellung nach Fig. 2A und 3 in die Stellung nach Fig. 2B und 4. Der Kontaktarm 103 gleitet dabei mit der Abtastnase 105 auf der Leitkontur 102 entlang und wird so weit freigegeben, dass die Kontaktpunkte 103a und 106a kontaktieren. Damit ist der Antriebsschalter 104 geschlossen, und der zentrale Antriebsmotor 3 wird in Betrieb gesetzt. Der Anschlag 95 hat beim Ausfahren der Bedienungsstange 62 den Schwenkhebel 89 aus der Verrastung aus dem Arretierungshaken 100 heraus mitgenommen nach links in die aus Fig. 4 ersichtliche zweite Stellung. Der Schwenkhebel 89 kann damit den Antriebsschalter 104 in dieser Lage nicht mehr beeinflussen bzw. öffnen. Es dreht sich nun auch die Schwungscheibe 8. Gleichzeitig dreht sich das Zahnrad 12 und das damit kämmende Zahnrad 14.

Durch das Ausfahren der Bedienungsstange 62 schwenkt der Rasthebel 58 (Fig. 2A) um die Achse 59, und der Raststift 65 kommt in den Wirkbereich mit der Herzkurve 56 nach Fig. 2B.

Weil das Zahnrad 14 nicht in Eingriff ist mit dem Zahnrad 25, dreht der Wickeldorn 21 nicht mit. Die Scheibe 42 (Fig. 1) ist über ihre separate Reibungskupplung mit dem Wickeldorn 21 verbunden und steht damit auch still. Da beim Eindringen der Kassette ein Drehmoment auf das Schaltelement 46 fehlt, weil die Bandwickel noch nicht umlaufen und das Band still steht, bleibt das Schaltelement 46 in der in Fig. 1 dargestellten Stellung stehen und kommt damit mit dem Stift 49 auf die Aussenseite der Steuerkurve 51. Damit macht das Schaltelement 46 eine Bewegung im Uhrzeigersinn gemäss Pfeil 46a und schwenkt das Verbindungselement 52 entgegen dem Uhrzeigersinn (Pfeil 67). Weil der Rasthebel 58 geschwenkt ist und der Stift 65 der Herzkurve im Wirkbereich ist, umläuft der Stift 65 nun die Wand 68 der Herzkurve 56 und fällt in die Mulde 70 ein. Damit ist das Verbindungselement in einer eingeschwenkten Stellung eingerastet (Fig. 2B). Durch das Schwenken des Verbindungselementes 52 entgegen dem Uhrzeigersinn in Richtung des Pfeiles 67 bewegt sich der Nocken 71 nach innen und drückt gegen die Blattfeder 72. Die Blattfeder 72 drückt ihrerseits über den Stift 76 und die Halterung 77 gegen die Kopfplatte 74 und schiebt die Kopfplatte 74 in Richtung auf die Tonwelle 10. Dabei bilden die Teile 46, 51, 52 und 71 eine Servoeinrichtung, mit der die Kopfplatte aus einer Pausenstellung (Stand by) in eine Spielstellung überführbar ist. In der Spielstellung liegt die Andruckrolle 79 an der Tonwelle 10 an. Ausserdem liegt die Kopfplatte 74 an einem Anschlagstift 78 an (Fig. 5). Dies ist die Spielstellung der Kopfplatte, in der bei umlaufendem Motor 3 das Magnetband am Kopf 75 entlanggeführt wird. Beim Vorfahren der Kopfplatte hat sich das freie Ende 107 des Schwenkhebels 89 von dem Anschlag 95 gelöst. Dadurch freigeworden, hat die Feder 93 den Schwenkhebel 89 in die Mittelstellung zurückgestellt (Fig. 5). In dieser Lage liegt das freie Ende 107 des Schalthebels 89, welches zugleich eine Schaltfläche bildet, der Rolle 105 gegenüber, ohne diese zu berühren.

Beim Erreichen des Bandendes bleibt das Band stehen. Dadurch wird das Schaltelement 46 mit seinem Stift 49 erneut nach aussen im Uhrzeigersinn (Pfeil 46a) geschwenkt. Das Verbindungselement 52 wird erneut entgegen dem Uhrzeigersinn verschwenkt (Fig. 2B) in Richtung des Pfeiles 67. Das Verbindungselement 52 wird bei diesem Bewegen über den Normalhub, der bei eingerasteter Lage vorliegt, in einem Überhub weitergeschwenkt. Der Überhub wird möglich, da der Nokken 71 gegen die Blattfeder 72 an der Kopfplatte 74 drückt über den Hebel 77 und den Stift 76. Damit hat der Nocken 71 einen Ausweichspielraum in Richtung auf die Kopfplatte 74. Bei diesem Überhub fährt der Stift 65 aus der Mulde 70 heraus, und der Rastmechanismus 57 entrastet. Unter der Wirkung der Feder 54 schwenkt dann das entrastete Verbindungselement 52 im Uhrzeigersinn, so dass der Nocken 71 nach aussen fährt. In dieser Lage ist die Kopfplatte nach aussen zurückgefahren in die Pausenstellung nach Fig. 6. Dabei ist der Schwenkhebel 89 in seiner Mittelstellung ebenfalls nach aussen gefahren, und die Schaltfläche 107 hat die Nase 105 nach aussen gedrückt, so dass sich die Kontaktpunkte 103a und 106a voneinander getrennt haben. Der Schalter 104 ist damit geöffnet. Das hat zur Folge, dass der Motor 3 stillgesetzt wird. In dieser Lage liegt die Bedienungsstange 62 immer noch in einer ausgefahrenen Stellung. Der Leitstift 84 liegt am Ende der Leitkontur 85. Die Kassette ist im Gerät verblieben, und der Schwenkhebel 86 liegt noch immer in der Einzugstellung.

Die Pausenstellung (Stand by) der Kopfplatte kann auch erreicht werden durch das Antippen der Taste 63. Beim Antippen der Taste 63 bewegt sich die Bedienungsstange 62 über einen kurzen Weg nach innen, der Führungsstift 60 läuft in der Führungskulisse 61 über eine Verschwenkung 61a und kommt in die gestrichelte Lage nach Fig. 2B. Auf diese Weise hat der Rasthebel 58 sich entgegen der Richtung des Pfeiles 64 verschwenkt. Bei diesem Verschwenken ist der Stift 65 aus der Mulde 70 der Herzkurve 56 herausgelaufen. Das Verbindungselement 52 ist damit entrastet und kann mittels der Feder 54 entgegen dem Pfeil 67 verschwenken. Das hat zur Folge, dass der Nocken 71 zurückfährt und die Kopfplatte 74 von der Feder 54 zurückgezogen wird. Damit nimmt die Kopfplatte 74 dieselbe Pausenstellung ein, in die sie nach Erreichen des Bandendes einläuft. In dieser in Fig. 6 dargestellten Stellung liegt der Schwenkhebel 89 in seiner Mittelstellung, da er von dem Anschlag 95 nicht berührt wurde. Der Schwenkhebel 89 drückt nun zurückgefahren gegen die Nase 105 und öffnet den Schalter 104. Die Stange 62 ist nach dem Antippen durch die Feder 88 gleich wieder in ihre ausgefahrene Stellung zurückgekehrt.

Soll das Laufwerk nun wieder in die Betriebsstellung überführt werden, wobei die Kopfplatte 74 in die Spielstellung gebracht werden muss, dann genügt es, die Taste 63 über einige Millimeter einzudrücken. Dabei läuft der Leitstift 84 an der Bedienungsstange 62 auf eine schräge Fläche 85a (Fig. 7) der Leitkontur 85 auf. Dieses Auflaufen ist als Druckpunkt oder Punkt einer gewissen Schwergängigkeit spürbar. In dieser Einschubstellung hat der Anschlag 95 den Schwenkhebel 89 nach rechts in die erste Stellung verschwenkt, in der der Ansatz 101 hinter den Arretierhaken 100 gefallen ist. Die Nase 105 liegt nun an der Leitkontur 102 an und fährt diese ab. Der Schalter 104 ist noch geöffnet (Fig. 7).

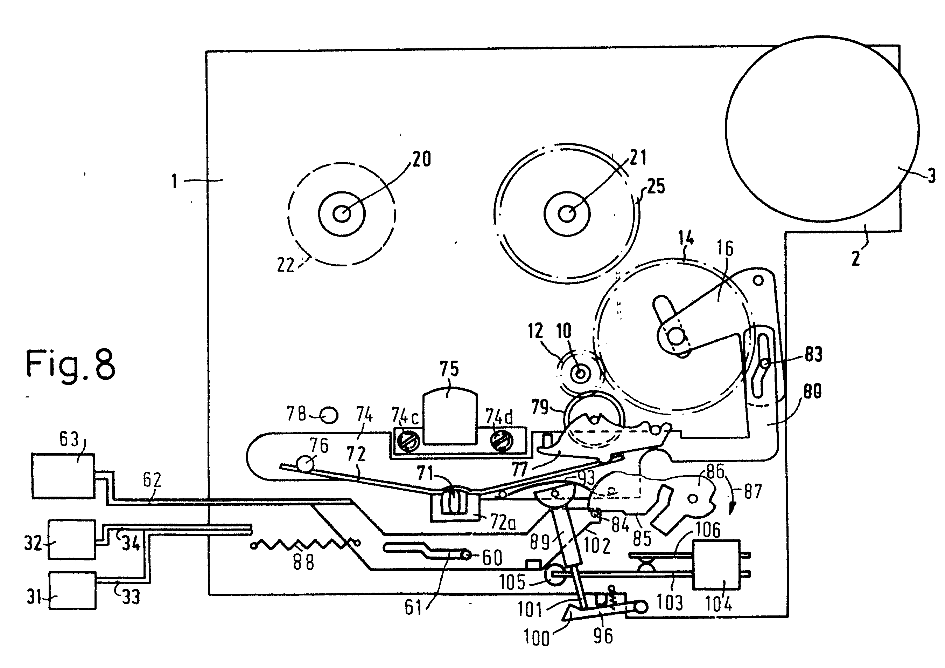

Nach dem Loslassen der Taste 63 zieht die Feder 88 die Bedienungsstange 62 wieder nach aussen. Die Rolle 105 kommt damit frei von der Leitkontur 102, und der Antriebsschalter 104 schliesst sich. Der Schalthebel 89 bleibt hinter dem Arretierhaken 100 verrastet (Fig. 8). Durch das Schliessen des Antriebsschalters 104 ist der Motor 3 in Umlauf versetzt worden, und die Servoeinrichtung ist, wie zuvor beschrieben, wieder in Betrieb gesetzt. Damit fährt die Kopfplatte 74 nach vorn in die Spielstellung. Bei dem Nach-Vorn-Fahren in die Spielstellung löst sich der Ansatz 101 von dem Arretierhaken, und die Feder 93 drückt den Schwenkhebel 89 in die Mittelstellung. Damit ist wieder die Lage nach Fig. 5 erreicht. Das Laufwerk spielt.

Soll eine Kassette ausgeworfen werden, dann wird die Taste 63 tief eingedrückt, wobei der Einzieh- und Auswurfhebel 86 anfängt, entgegen dem Pfeil 87 zu verschwenken. Das hat zur Folge, dass der Stift 60 in der Führungskulisse 61 in die Lage nach Fig. 2A bewegt wird, so dass das Verbindungselement 52 entrastet wird und die Feder 54 die Kopfplatte zurückzieht. Beim Eindrücken der Taste 63 hat der Anschlag 95 den Schwenkhebel 89 nach rechts in die erste Stellung verschoben, in der er vom Arretierhaken 100 arretiert und festgehalten wird. Durch das tiefe Eindrücken der Taste 63 ist der Anschlag 95 an dem Schwenkhebel 89 vorbeigelaufen und hat diesen nach dem Schwenken in die erste Stellung passiert. Jetzt wird wieder die Stellung nach Fig. 3 eingenommen. Die Kassette ist nun vom Hebel 86 ausgeworfen worden, und eine Neue kann eingeschoben werden.

**Patentansprüche**

1. Schaltmechanismus für das Laufwerk eines Magnetbandgerätes mit einer gegenüber dem abzutastenden Magnetband vor und zurück verfahrenden Kopfplatte (74), die in der Spielstellung vorgefahren verriegelt (71, 70, 65, 58) ist und nach Entriegelung, entweder bei Erreichen des Bandendes mittels einer Servoeinrichtung (44) oder bei Eindrücken einer Bedienungsstange (62), unter Federkraft (54) zurückfahrbar ist in eine Pausenstellung, in der die Kassette im Laufwerk eingeschoben verbleibt, wobei die Bedienungsstange (62) mit einer Führungskulisse (61) versehen ist, die für die Entriegelung der Kopfplatte sorgt und eine Schaltkontur aufweist für die Bedienung eines Antriebsschalters (104) des Laufwerksmechanismus, dadurch gekennzeichnet, dass

- auf der Kopfplatte (74) ein schwenkbares Bedienungselement (89) vorgesehen ist, das in einer Mittelstellung (Fig. 5) beim Zurückfahren der Kopfplatte (74) in die Pausenstellung (Fig. 6) den Antriebsschalter (104) abschalten kann und in einer ersten Schwenkstellung den Antriebsschalter (104) unberührt lässt, wobei an dem Bedienungselement (89) eine Schaltfläche (107) vorgesehen ist, mittels der der Antriebsschalter (104) beim Zurückverfahren der Kopfplatte (74) in die Pausenstellung abgeschaltet wird, wenn sich das Bedienungselement (89) in seiner Mittelstellung befindet,
- in der Pausenstellung das Bedienungselement (89) mittels eines Anschlages (95) an der Bedienungsstange (62) von der Mittelstellung in die erste Schwenkstellung (Fig. 7) überführt wird, wenn die Bedienungsstange (62) nach erneutem Eindrücken in einer Eindrück-Richtung verschoben wird,
- sich der Antriebsschalter (104) nach diesem erneuten Eindrücken beim Zurückfahren der Bedienungsstange (62) in der Gegenrichtung einschaltet (Fig. 8), wobei die damit eingeschaltete Servoeinrichtung (46, 51, 52, 71) des Laufwerksmechanismus die Kopfplatte (74) aus der Pausenstellung in die Spielstellung vorfährt, worauf das Bedienungselement (89) in die Mittelstellung (Fig. 5) zurückkehrt.

2. Schaltmechanismus nach Anspruch 1, dadurch gekennzeichnet, dass das Bedienungselement (89) in der ersten Schwenkstellung verbleibt, wenn die Bedienungsstange (62) in der Gegenrichtung zurückbewegt wird, und dass der Antriebsschalter (104) geschlossen bleibt, wenn das Bedienungselement (89) beim Vorfahren der Kopfplatte (74) in die Spielstellung am Antriebsschalter (104) vorbei unter Federkraft in die Mittelstellung zurückschwenkt.

3. Schaltmechanismus nach den Ansprüchen 1 und 2, dadurch gekennzeichnet, dass das Bedienungselement (89) nach dem Verschwenken in die erste Schwenkstellung in dieser Schwenkstellung arretiert ist, wenn die Bedienungsstange (62) in der Gegenrichtung zurückfährt, und dass sich die Arretierung (96) löst, wenn die Kopfplatte (74) in die Spielstellung vorfährt.

4. Schaltmechanismus nach den Ansprüchen 1 bis 3, dadurch gekennzeichnet, dass das Bedienungselement (89) ein um ein Drehgelenk (90) schwenkbarer Schwenkhebel (89) ist, der unter Federbelastung bestrebt ist, sich selbsttätig aus der ersten Schwenkstellung in die Mittelstellung zurückzustellen.

5. Schaltmechanismus nach Anspruch 4, dadurch gekennzeichnet, dass die Schaltfläche (107) am freien Ende des Schwenkhebels (89) angeordnet ist und über dieses freie Hebelende in Richtung des Schwenkhebels (89) ein den Schwenkhebel verlängernder Ansatz (101) herausragt, der mit einem Arretierhaken (100) zusammenwirkt.

6. Schaltmechanismus nach den Ansprüchen 4 und 5, dadurch gekennzeichnet, dass beim Einlegen der Kassette der Schwenkhebel (89) aus seiner ersten Stellung (Fig. 3) über die Mittelstellung in eine zweite Stellung (Fig. 4) schwenkbar ist mittels des Anschlages (95), in welcher zweiten Stellung der Schwenkhebel den Antriebsschalter (104) unberührt lässt.

7. Schaltmechanismus nach Anspruch 4, dadurch gekennzeichnet, dass der Schwenkhebel (89) im Bereich des Drehgelenkes (90) eine senkrecht zur Hebelmittellinie (91) verlaufende Verbreiterung (92) aufweist, über die sich die nachgebende Feder (93) spannt, die den Schwenkhebel (89) in die Mittelstellung zurückdrängt.

8. Schaltmechanismus nach einem oder mehreren der Ansprüche 1 bis 7, dadurch gekennzeichnet, dass der Antriebsschalter (104) einen zentralen Laufwerksmotor (3) betätigt, der über den Servomechanismus die Kopfplatte (74) bewegt.

9. Schaltmechanismus nach einem oder mehreren der Ansprüche 1 bis 8, dadurch gekennzeichnet, dass die Bedienungsstange eine Auswurfstange (62) ist, an der ein Leitstift (84) angeordnet ist, der eine Kontur (85) eines Einzieh- und Auswurfhebels (86) abfährt.

10. Schaltmechanismus nach Anspruch 9, dadurch gekennzeichnet, dass die Kontur (85) eine schräge Fläche (85a) aufweist, gegen welche der Leitstift (84) beim erneuten Drücken der Taste (63) an der Auswurfstange (62) aufläuft und dabei durch einen spürbaren Druckpunkt anzeigt, dass der Schwenkhebel (89) die erste Stellung erreicht hat.

## Claims

1. A switching mechanism for the deck of a magnetic-tape apparatus comprising a head-mounting plate (74) which can be moved forwards and backwards relative to the magnetic tape to be scanned, which plate is latched (71, 70, 65, 58) in the forward position in the play mode and, when unlatched, can be moved back under spring force (54) to a standby position, in which the cassette remains inside the deck, either by means of a servo device (44) when the end of the tape is reached or when an actuating rod (62) is pressed inwards, the actuating rod (62) being provided with a guide slot (61) by means of which the head-mounting plate is unlatched and with a switching profile for the actuation of a drive switch (104) of the deck mechanism, characterized in that
- the head-mounting plate (74) carries a pivotable actuating member (89) which, when in a centre position (Fig. 5) during the return of the head-mounting plate (74) to the standby position (Fig. 6), can switch off the drive switch (104) and in a first pivotal position does not influence the drive switch (104), the actuating member (89) comprising a switching surface (107) by means of which the drive switch (104) is switched off when the head-mounting plate (74) returns to the standby position if the actuating member (89) is in its centre position,

– the actuating member (89) is moved from the centre position to the first pivotal position by means of a stop (95) on the actuating rod (62) if the actuating rod (62) is moved in a direction of depression after re-depression,

– the drive switch (104) is switched on after this re-depression when the actuating rod (62) moves back in the opposite direction (Fig. 8), the servo mechanism (46, 51, 52, 71), thus started, of the deck moving the head-mounting plate (74) from the standby position to the play position, after which the actuating member (89) resumes the centre position (Fig. 5).

2. A switching mechanism as claimed in Claim 1, characterized in that the actuating member (89) remains in the first pivotal position when the actuating rod (62) is moved back in the opposite direction, and the drive switch (104) remains closed when the actuating member (89) pivots back into the centre position past the drive switch (104) under spring force as the head-mounting plate (74) is moved forwards to the play position.

3. A switching mechanism as claimed in Claims 1 and 2, characterized in that after the actuating member (89) has been pivoted into the first pivotal position it is latched in this pivotal position if the actuating rod (62) moves back in the opposite direction, and unlatching (96) is effected if the head-mounting plate (74) moves to the play position.

4. A switching mechanism as claimed in Claims 1 to 3, characterized in that the actuating member (89) is a one-arm pivotal lever (89) which is pivotable about a pivot (90) and which is spring-loaded to return automatically from its first pivotal position to its centre position.

5. A switching mechanism as claimed in Claim 5, characterized in that the switching surface (107) is situated on the free end of the pivotal lever (89) and the pivotal lever comprises an extension (101) which projects from said free lever end in the direction of the pivotal lever (89) to co-operate with a latching hook (100).

6. A switching mechanism as claimed in Claims 4 and 5, characterized in that the pivotal lever (89) can be pivoted from its first position (Fig. 3) into a second position (Fig. 4) via the centre position by means of the stop (95) when the cassette is inserted, in which second position the pivotal lever does not influence the drive switch (104).

7. A switching mechanism as claimed in Claim 4, characterized in that near its pivot (90) the pivotal lever (89) has a widened portion (92) which extends perpendicularly to the central axis (91) of said lever, via which portion a spring (93) is tensioned which urges the pivotal lever (89) back into its centre position.

8. A switching mechanism as claimed in any one or several of the Claims 1 to 7, characterized in that the drive switch (104) energizes a central tape-transport motor (3) which moves the head-mounting plate (74) via the servo mechanism.

9. A switching mechanism as claimed in any one or several of the Claims 1 to 8, characterized in that the actuating rod is an ejection rod (62) which carries a guide pin (84) which follows a guide surface (85) of a loading and ejection lever (86).

10. A switching mechanism as claimed in Claim 9, characterized in that the guide surface (85) comprises an oblique portion (85a) onto which the guide pin (84) runs when the button (63) on the ejection rod (62) is depressed again, which gives rise to a distinct increase in resistance to depression, indicating that the pivotal lever (89) has reached the first position.

**Revendications**

1. Mécanisme de commutation pour le système d'entraînement d'un appareil à bande magnétique comportant une plaque porte-tête (74) pouvant être avancée et reculée par rapport à la bande magnétique à lire, qui est verrouillée (71, 70, 65, 58) avancée dans la position de lecture et qui, après déverrouillage, soit au moyen d'un servomécanisme (44) lorsque la fin de la bande est atteinte, soit par l'enforcement d'une tige de commande (62), peut être ramenée en arrière sous la force d'un ressort (54) dans une position d'arrêt momentané dans laquelle la cassette reste introduite dans le système d'entraînement de bande, la tige de commande (62) étant pourvue d'une coulisse de guidage (61) qui assure le déverrouillage de la plaque porte-tête et présente un contour de commutation pour la manœuvre d'un interrupteur d'actionnement (104) du système d'entraînement de bande, caractérisé en ce que

– sur la plaque porte-tête (74) est prévu un élément de commande pivotant (89) qui, dans sa position médiane (Fig. 5), lors du retour de la plaque porte-tête (74) dans la position d'arrêt momentané (Fig. 6), peut faire déclencher l'interrupteur d'actionnement (104) et, dans une première position de pivotement, reste hors de contact de l'interrupteur (104), étant entendu que sur l'élément de commande (89) est prévue une surface de commutation (107) au moyen de laquelle l'interrupteur d'actionnement (104) est déclenché lors du retour de la plaque porte-tête (74) dans la position d'arrêt momentané, lorsque l'élément de commande (89) se trouve dans sa position médiane,

– dans la position d'arrêt momentané, l'élément de commande (89) est transféré au moyen d'une butée (95) prévue sur la tige de commande, de sa position médiane dans sa première position de pivotement (Fig. 7), lorque la tige de commande (62) est déplacée dans un sens d'enfoncement après une nouvelle pression,

– l'interrupteur d'actionnement (104), après cette nouvelle pression, s'enclenche lors du retour de la tige de commande (62) dans le sens inverse (Fig. 8), de sorte que le servomécanisme (46, 51, 52, 71) du système d'entraînement de bande, qui est ainsi enclenché, fait avancer la plaque porte-tête (74) de la position d'arrêt momentané dans la position de lecture, après quoi l'élément de commande (89) revient dans sa position médiane (Fig. 5).

2. Mécanisme suivant la revendication 1, caractérisé en ce que l'élément de commande (89) reste dans la première position de pivotement, lorsque la tige de commande (62) est ramenée dans le sens inverse et l'interrupteur d'actionnement (104) reste fermé lorsque l'élément de commande (89), au moment de l'avancement de la plaque porte-tête (74) dans la position de lecture, revient dans la position médiane sous la force d'un ressort par pivotement en regard de l'interrupteur d'actionnement (104).

3. Mécanisme suivant les revendications 1 et 2, caractérisé en ce que l'élément de commande (89), après le pivotement dans la première position de pivotement, est arrêté dans cette position lorsque la tige de commande (62) revient dans le sens opposé, et l'arrêt (96) lâche lorsque la plaque porte-tête (74) avance dans la position de lecture.

4. Mécanisme suivant les revendications 1 à 3, caractérisé en ce que l'élément de commande (89) est un levier pivotant monobras pouvant pivoter autour d'une articulation (90), ce levier tendant, sous la sollicitation d'un ressort, à revenir automatiquement de sa première position dans sa position médiane.

5. Mécanisme suivant la revendication 4, caractérisé en ce que la surface de commutation (107) est disposée sur l'extrémité libre du levier pivotant (89) et, sur cette extrémité libre, dans le sens du levier pivotant (89), s'étend une saillie (101) prolongeant le levier pivotant, qui coopère avec un crochet d'arrêt (100).

6. Mécanisme suivant les revendications 4 et 5, caractérisé en ce que lors de l'introduction de la cassette, le levier pivotant (89) peut pivoter à partir de sa première position (Fig. 3) en passant par sa position médiane, dans une seconde position (Fig. 4), à l'intervention de la butée (95), et, dans cette seconde position, le levier pivotant reste hors de contact de l'interrupteur d'actionnement (104).

7. Mécanisme suivant la revendication 4, caractérisé en ce que le levier pivotant (89) présente, dans le domaine de l'articulation (90), un épanouissement (92) s'étendant perpendiculairement à l'axe central (91) du levier, sur lequel agit un ressort flexible (93) qui rappelle le levier pivotant (89) en position médiane.

8. Mécanisme suivant l'une quelconque des revendications 1 à 7, caractérisé en ce que l'interrupteur d'actionnement (104) actionne un moteur central (3) du système d'entraînement de bande qui déplace la plaque porte-tête par l'intermédiaire du servomécanisme.

9. Mécanisme suivant l'une quelconque des revendications 1 à 8, caractérisé en ce que la tige de commande est une tige d'éjection (62) sur laquelle est prévu un doigt de guidage (84) qui suit un contour (85) d'un levier d'introduction et d'éjection (86).

10. Mécanisme suivant la revendication 9, caractérisé en ce que le contour (85) présente une surface oblique (85a) contre laquelle le doigt de guidage (84) glisse lorsque la touche (63) de la tige d'éjection (62) est une nouvelle fois pressée et indique ainsi, par un point dur perceptible, que le levier pivotant (89) a atteint la première position.

Fig.1

Fig.2a

Fig.2b

Fig.3

Fig. 4

Fig. 5

EP 0 149 871 B1

Fig.6

Fig.7

Fig. 8

EP 0 149 871 B1